# EUROPÄISCHE PATENTSCHRIFT

(11) **EP 2 458 190 B1**
(45) Veröffentlichungstag und Bekanntmachung des Hinweises auf die Patenterteilung: **13.07.2016**
(21) Anmeldenummer: 11189138.8
(22) Anmeldetag: 15.11.2011
(51) Int. Cl.: F02M 31/06, F02M 31/14, F02B 63/02, F02M 15/02

(54) **Motorarbeitsgerät mit verbesserter Vergaservorwärmung**
Motorised work device with improved carburettor pre-heating
Appareil de travail à moteur doté d'un préchauffage de carburateur amélioré

(30) Priorität: 30.11.2010 DE 202010016017 U
(43) Veröffentlichungstag der Anmeldung: 30.05.2012
(73) Patentinhaber: Makita Corporation, Anjo, Aichi 446-8502 (JP)
(72) Erfinder: Vick, Christian, 21423 Winsen/Luhe (DE)
(74) Vertreter: RGTH

(56) Entgegenhaltungen:
- DE-A1- 3 523 949
- DE-A1-102009 008 055
- DE-U1- 20 103 829
- US-A- 4 773 365
- US-A1- 2003 037 773
- US-A1- 2003 183 208

## Beschreibung

Die vorliegende Erfindung betrifft ein Motorarbeitsgerät wie eine Kettensäge, ein Handschleifgerät, eine Handkreissäge, einen Rasenmäher, einen Rasentrimmer oder ein sonstiges Handwerkzeug oder Gerät zur Garten- und Landschaftspflege, aufweisend einen Verbrennungsmotor mit wenigstens einem Zylinder und wenigstens einem Vergaser, der in einem Vergaserraum angeordnet ist, der durch eine Zwischenwand von einem Motorraum getrennt ist, wobei ein Gehäuse vorgesehen ist, das den Motorraum wenigstens teilweise umschließt, sodass sich ein oberer Teil des Zylinders in Richtung zum Gehäuse hin erstreckt, wobei ferner ein Lüfterrad vorgesehen ist, durch das Luft aus dem Motorraum durch eine Warmluftöffnung in der Zwischenwand in den Vergaserraum einbringbar ist.

### STAND DER TECHNIK

Aus DE 10 2009 008 055 A1 ist ein gattungsbildendes Motorarbeitsgerät bekannt, das einen Vergaserraum zur Aufnahme eines Vergasers und einen Motorraum zur Aufnahme eines Motors aufweist, wobei der Vergaserraum und der Motorraum durch eine Zwischenwand getrennt sind. In der Zwischenwand ist eine Luftöffnung vorgesehen, die wahlweise mit einem Verschlusselement geöffnet oder geschlossen werden kann. Wird das Verschlusselement geschlossen, so muss zum Betrieb des Verbrennungsmotors eine weitere Öffnung vorgesehen sein, durch die der Verbrennungsmotor über den Vergaser die Verbrennungsluft in den Vergaserraum einsaugen kann.

Häufig ist eine Staubvorabscheidung der Ansaugluft vorgesehen, sodass die Luft, die vom Verbrennungsmotor angesaugt wird und daher in den Vergaserraum eintritt, mittels der Staubvorabscheidung gereinigt wird. Damit die Luft zusätzlich in den Vergaserraum befördert werden kann, ist ein Lüfterrad vorgesehen, das beispielsweise durch den Verbrennungsmotor betrieben wird. Über das Lüfterrad wird die Luft in den Vergaserraum angesaugt, und der Vergaserraum muss abgedichtet sein, da sonst staubbelastete Luft von außen angesaugt wird. Wird die Luft über das Lüfterrad in den Vergaserraum gedrückt, entsteht in diesem ein Überdruck, der unter anderem dafür sorgt, dass keine staubbelastete Luft von außen angesaugt wird. Ferner kann dabei die beste Wirkung der Staubvorabscheidung erzielt werden.

Wird das Motorarbeitsgerät bei niedrigen Außentemperaturen betrieben, beispielsweise im Winter, muss die Luft, die in den Vergaserraum eintritt, vorgewärmt werden, damit der Vergaser nicht vereist und das Motorarbeitsgerät außer Funktion setzt. Dabei ist es bekannt, die Luft aus dem Motorraum in den Vergaserraum zu leiten, da die Luft aus dem Motorraum vorgewärmt ist. Dafür ist in der Zwischenwand zwischen dem Motorraum und dem Vergaserraum eine Warmluftöffnung vorgesehen, durch die die erwärmte Luft in den Vergaserraum gelangt. Wird der Vergaserraum jedoch grundsätzlich über eine Kaltluftöffnung von der Staubvorabscheidung mit einem Überdruck gespeist, so entsteht das Problem, dass Luft, die durch die Warmluftöffnung in der Zwischenwand in den Vergaserraum eingebracht wird, dann nicht in den Vergaserraum gelangen kann, wenn bereits mit einem Überdruck Luft über die Staubvorabscheidung in den Vergaserraum gedrückt wird. Um das Eintreten von warmer Luft durch die Warmluftöffnung dennoch zu ermöglichen, ist beispielsweise vorgesehen, die Öffnung, durch die Luft aus der Staubvorabscheidung in den Vergaserraum gelangt, durch ein Verschlusselement zu verschließen. Nachteilhafterweise kann erst anschließend die Luft durch die Warmluftöffnung in den Vergaserraum gelangen.

Die DE 201 03 829 U1 zeigt ein handgeführtes Arbeitsgerät mit einem Verbrennungsmotor und einem Vergaser zur Versorgung des Verbrennungsmotors mit einem Kraftstoffluftgemisch, wobei mittels des Verbrennungsmotors ein Verbrennungsluftstrom durch den Vergaser angesaugt wird, wobei ein durch den Verbrennungsmotor erwärmtes Wärmemedium außenseitig am Vergaser getrennt vom Verbrennungsluftstrom vorbeiführbar ist.

Die US 2003/0183208 A1 behandelt ein Motorarbeitsgerät, das beispielhaft als Kettensäge ausgeführt ist, und das Motorarbeitsgerät weist einen in einem Motorraum aufgenommenen Verbrennungsmotor mit einem Zylinder auf, und mit einem Gebläse wird am Zylinder des Motors erwärmte Luft durch einen Faltenbalg in eine Vorkammer geleitet, die die erwärmte Luft schließlich in einen Vergaserraum leitet, in dem der Vergaser für den Verbrennungsmotor aufgenommen ist. Der Faltenbalg ist in der Nähe der Zündkerze am oberen Ende des Zylinders angeordnet.

Die US 2003/0037773 A1 zeigt ein Motorarbeitsgerät mit einem Verbrennungsmotor, der innerhalb eines Motorraums aufgenommen ist und einen Zylinder umfasst. Weiterhin ist ein Vergaser gezeigt, der in einem Vergaserraum aufgenommen ist, und in dem zugleich ein Luftfilter angeordnet ist. In einer Zwischenwand zwischen dem Motorraum und dem Vergaserraum ist eine Warmluftöffnung gezeigt, die im oberen Bereich des Zylinders in der Wand eingebracht ist.

Bei einem handgeführten Arbeitsgerät mit einem Verbrennungsmotor nach der DE 102009008055 A1 ist der Zylinder mit Kühlrippen versehen. Von einem Lüfterrade wird ein Kühlluftstrom erzeugt, der über die Kühlrippen geführt wird. Ein Vergaser ist mittels erwärmter Kühlluft bedarfsweise temperierbar, wobei eine Steuerung des Kühlluftstroms zum Vergaser dadurch erfolgt, dass eine die erwärmte Kühlluft durchlassende Öffnung mittels eines Verschlusselementes wahlweise geöffnet oder geschlossen wird. Um eine verbesserte Kühlung des Zylinders sowohl im Sommerbetrieb als auch im Winterbetrieb zu erreichen, ist das Verschlusselement mit mindestens einer Luftleitwand versehen, die sich im Wesentlichen quer zum Kühlluftstrom erstreckt und diesen mindestens teilweise staut und umlenkt.

In der Druckschrift DE 35 23 949 A1 wird eine Vorrichtung zur Steuerung der Ansaugluft für den Vergaser eines handgesteuerten Arbeitsgerätes, insbesondere einer Motorkettensäge, vorgeschlagen. Dabei wird bei Winterbetrieb die vom Zylinder des Motors erwärmte Kühlluft durch eine Übertrittsöffnung hindurch zum Vergaser geleitet, während beim Sommerbetrieb die Übertrittsöffnung über einen Schieber abgesperrt wird, der um eine Achse schwenkbar gelagert ist. Der die Übertrittsöffnung wahlweise freigebende oder sperrende Schieber ist vorteilhaft so ausgeführt, dass er als in seiner die Übertrittsöffnung freigebenden Öffnungsstellung die erwärmte Kühlluft stauender Umlenkteil ausgebildet ist, der die angestaute erwärmte Kühlluft in Richtung zum Vergaser hin führt.

Es ist die Aufgabe der vorliegenden Erfindung, ein Motorarbeitsgerät mit einer verbesserten Vergaservorwärmung zu schaffen, insbesondere ist es die Aufgabe der vorliegenden Erfindung, ein Motorarbeitsgerät mit einer Vergaservorwärmung zu schaffen, die eine erleichterte Bedienung ermöglicht.

Diese Aufgabe wird ausgehend von einem Motorarbeitsgerät gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass die Warmluftöffnung in dem Bereich der Zwischenwand angeordnet ist, der angrenzend an den oberen Teil des Zylinders angeordnet ist.

Die Erfindung geht dabei von dem Gedanken aus, ein Motorarbeitsgerät mit einer Warmluftöffnung in der Zwischenwand zwischen dem Motorraum und dem Vergaserraum zu schaffen, die derart angeordnet ist, dass auch dann Luft durch die Warmluftöffnung in den Vergaserraum gelangen kann, wenn bereits Luft durch eine weitere Öffnung von der Staubvorabscheidung in den Vergaserraum gedrückt wird. In dem Bereich zwischen dem oberen Teil des Zylinders und dem Gehäuse entsteht ein erhöhter Staudruck, der durch das Lüfterrad erzeugt wird. Vorteilhafterweise ist das Gehäuse wenigstens in dem Bereich, in dem das Gehäuse den Zylinder des Verbrennungsmotors umschließt, druckdicht ausgebildet. Im Ergebnis bildet sich angrenzend an den oberen Teil des Zylinders zwischen dem Zylinder und dem Gehäuse ein Staudruck verursacht durch das Lüfterrad, und die gestaute Luft kann die Warmluftöffnung derart beaufschlagen, dass die Luft trotz Überdruck im Vergaserraum in diesen hineingelangen kann.

Im Bereich des oberen Teils des Zylinders ist eine Zündkerze an diesem angeordnet, wobei die Warmluftöffnung im Bereich der Zündkerze beziehungsweise angrenzend an die Zündkerze angeordnet ist. Im Zylinder kann ein Kolben hubbeweglich geführt sein, wobei die Warmluftöffnung insbesondere in der Öffnung oberhalb des oberen Tonpunktes des Kolbens angrenzend an den Zylinder angeordnet ist. Damit ergibt sich insbesondere eine Anordnung der Warmluftöffnung dicht unter dem höchsten Punkt des Gehäuses. Die Führung der erwärmten Luft erfolgt dabei oberhalb des Zylinders, da dort der Druck der Luft am höchsten ist, die durch das Lüfterrad in den Bereich zwischen dem Gehäuse und dem oberen Teil des Zylinders hinein befördert wird. Da die Luft, die vor der Warmluftöffnung und damit vor dem Eintritt in den Vergaserraum aufgestaut wird, die Kühlluft des Zylinders des Verbrennungsmotors bildet, erfolgt das Aufstauen der Kühlluft erst nach einem konvektiven Umströmen des Zylinders, um den Zylinder mit der Luft zu kühlen und folglich die Luft durch den Zylinder zu erwärmen. Es hat sich gezeigt, dass der Druck der aufgestauten Luft am erfindungsgemäßen Ort der Warmluftöffnung dicht unterhalb des Gehäuses am größten ist, sodass die Warmluft durch die Warmluftöffnung effektiv in den Vergaserraum gelangen kann.

Erfindungsgemäß weist das Gehäuse Mittel auf, die eine Strömung der Luft vom Lüfterrad in Richtung zur Warmluftöffnung schaffen und innenseitig am Gehäuse angeordnet sind. Durch die Mittel wird das Aufstauen der Luft im Motorraum vor der Warmluftöffnung begünstigt. Wird die Warmluftöffnung geöffnet, kann durch die erfindungsgemäßen Mittel eine besonders große Menge an Luft durch die Warmluftöffnung in den Vergaserraum gelangen, ohne beispielsweise die Förderleistung des Lüfterrades zu erhöhen. Die Mittel können dabei starr und permanent innenseitig am Gehäuse angeordnet sein, und die Mittel sind nicht dazu vorgesehen, manuell bedient zu werden.

Erfindungsgemäß weisen die Mittel wenigstens eine und bevorzugt mehrere Luftleitrippen und/oder wenigstens eine und bevorzugt mehrere Luftleitwände auf die insbesondere innenseitig im Gehäuse angeordnet sind. Die Luftleitrippen und/oder Luftleitwände können starr und permanent an der Innenseite des Gehäuses angeordnet sein. Dabei sind die Luftleitrippen und/oder Luftleitwände derart angeordnet, dass sich zwischen dem oberen Teil des Zylinders und dem Gehäuse vor Einlauf in die Warmluftöffnung ein erhöhter Staudruck der Luft bilden kann. Insbesondere können die Luftleitrippen und/oder Luftleitwände einen trichterartigen Zulauf in Richtung zur Warmluftöffnung bilden, sodass die Luft, die sich über einen größeren Bereich zwischen dem oberen Teil des Zylinders und dem Gehäuse bewegt, in Richtung zur Warmluftöffnung umgelenkt werden kann. Alternativ oder zusätzlich können die Luftleitrippen und/oder Luftleitwände auch am Zylinder des Verbrennungsmotors angeordnet sein.

Der Staudruck im Motorraum kann vor Einlauf in die Warmluftöffnung größer sein als der Druck der Luft, die sich im Vergaserraum befindet. Zusätzlich zur Warmluftöffnung ist eine untere Motorraumöffnung in der Zwischenwand vorgesehen sein, durch die vom Lüfterrad bereitgestellte Luft von der unteren Seite des Motorraums in den Vergaserraum eingebracht werden kann. Durch das Einbringen der Luft durch die Motorraumöffnung in den Vergaserraum entsteht ein Druck im Vergaserraum, der größer ist als der Umgebungsdruck. Insbesondere wird die Luft mit dem Lüfterrad durch die Motorraumöffnung in den Vergaserraum eingeleitet, wodurch der Überdruck in diesem entsteht. Durch die erfindungsgemäße Anordnung der Warmluftöffnung und insbesondere durch die im Gehäuse vorgesehenen Mittel, die die Strömung der Luft vom Lüfterrad in Richtung zur Warmluftöffnung schaffen, wird der Staudruck im Motorraum vor Einlauf in die Warmluftöffnung derart vergrößert, dass dieser Staudruck größer ist als der Druck der Luft, der sich im Vergaserraum befindet. Im Ergebnis muss die Motorraumöffnung nicht erst verschlossen werden, um warme Luft durch die Warmluftöffnung vom Motorraum in den Vergaserraum zu befördern.

Erfindungsgemäß ist eine Staubvorabscheidung vorgesehen, die durch die Motorraumöffnung in den Vergaserraum einbringbare Luft über die Staubvorabscheidung in den Vergaserraum einbringt welche Luft insbesondere eine niedrigere Temperatur aufweist als die Luft, die durch die Warmluftöffnung in den Vergaserraum einbringbar ist. Sowohl die Luft, die durch die Motorraumöffnung in den Vergaserraum gelangt als auch die Luft, die durch die Warmluftöffnung in den Vergaserraum gelangt, kann durch das Lüfterrad bereitgestellt werden, wobei die Luft jeweils die Staubvorabscheidung durchlaufen kann. Folglich kann die Luft einerseits den Weg direkt durch die Motorraumöffnung in den Vergaserraum nehmen, ohne am Zylinder erwärmt zu werden, oder die Luft nimmt den Weg durch die Warmluftöffnung, und wird zuvor am Zylinder erwärmt. Den Pfad, den die Luft nimmt, um von der Staubvorabscheidung in den Vergaserraum zu gelangen, kann dadurch bestimmt werden, ob die Warmluftöffnung verschlossen wird oder nicht.

Somit kann ein Verschlusselement vorgesehen sein, das in eine Sommerstellung bringbar ist, in der die Warmluftöffnung geschlossen ist, und das in eine Winterstellung bringbar ist, in der die Warmluftöffnung geöffnet ist. Das Verschlusselement kann beispielsweise manuell oder elektrisch betätigt werden, und es ist hinreichend, das Verschlusselement zu öffnen, um die Warmluftöffnung freizugeben, sodass Luft durch die Warmluftöffnung vom Motorraum in den Vergaserraum gelangen kann, ohne zuvor oder zugleich die Motorraumöffnung zu verschließen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 ein Ausführungsbeispiel eines Motorarbeitsgerätes in einer Ansicht einer ersten Schnittebene,
Figur 2 das Ausführungsbeispiel des Motorarbeitsgerätes gemäß Figur 1 in einer quergeschnittenen Ansicht gemäß einer zweiten Schnittebene und
Figur 3 das Ausführungsbeispiel des Motorarbeitsgerätes in einer noch weiteren Schnittebene.

### BEVORZUGTES AUSFÜHRUNGSBEISPIEL DER ERFINDUNG

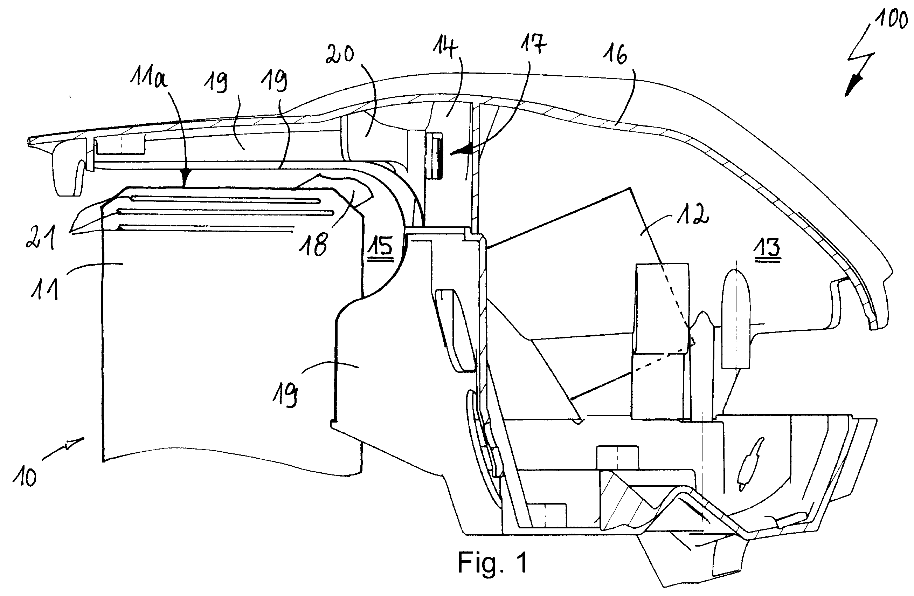

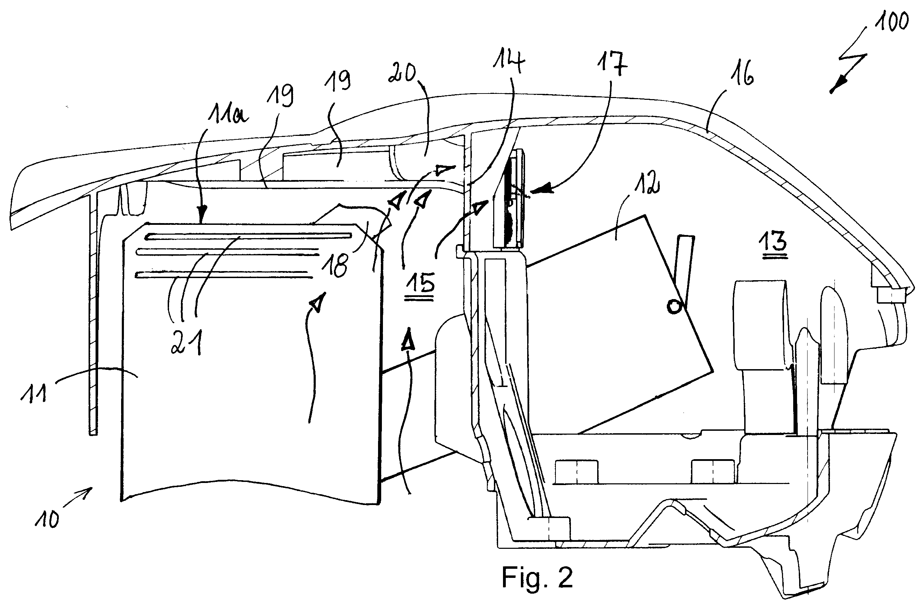

In den Figuren 1 und 2 ist ein Ausführungsbeispiel eines Motorarbeitsgerätes 100 gezeigt, welches als Kettensäge, als Handschleifgerät, als Handkreissäge, als Rasenmäher, als Rasentrimmer oder als ein sonstiges Handwerkzeug oder Gerät zur Garten- und Landschaftspflege ausgeführt sein kann. Das Motorarbeitsgerät 100 weist einen Verbrennungsmotor 10 auf, der im Bereich des Zylinders 11 gezeigt ist. Ferner ist ein Vergaser 12 dargestellt, der in einem Vergaserraum 13 angeordnet ist, wobei der Verbrennungsmotor 10 mit dem Zylinder 11 in einem Motorraum 15 angeordnet ist. Die Räume 13 und 15 werden durch ein Gehäuse 16 gebildet und durch eine Zwischenwand 14 voneinander getrennt.

Bei Betrieb des Verbrennungsmotors 10 saugt dieser durch den Vergaser 12 Verbrennungsluft an, die dem Vergaserraum 13 entnommen wird. Wird das Motorarbeitsgerät 100 bei niedrigen Temperaturen betrieben, beispielsweise im Winter, so kann bei niedrigen Lufttemperaturen im Vergaserraum 13 der Vergaser 12 vereisen, sodass das Motorarbeitsgerät 100 außer Betrieb geraten kann. Um diesem Problem zu begegnen und im Vergaserraum 13 Luft mit einer erhöhten Temperatur zur Verfügung zu stellen, ist eine Warmluftöffnung 17 vorgesehen, die in der Zwischenwand 14 eingebracht ist, und durch die Luft aus dem Motorraum 15 in den Vergaserraum 13 überführt werden kann. Dabei wird die Luft im Motorraum 15 durch ein nicht näher gezeigtes Lüfterrad bereitgestellt, sodass im Motorraum 15 ein Überdruck herrscht. Wird die Warmluftöffnung 17 geöffnet, so kann zunächst Luft vom Motorraum 15 in den Vergaserraum 13 gelangen, sofern im Vergaserraum 13 ein niedrigerer Druck herrscht als im Motorraum 15.

Wird das Motorarbeitsgerät 100 bei höheren Temperaturen betrieben, beispielsweise im Sommer, so gelangt die Verbrennungsluft durch eine nicht näher gezeigte Motorraumöffnung vom Lüfterrad in den Vergaserraum 13. Die in den Vergaserraum 13 eingebrachte Luft wird ebenfalls durch das Lüfterrad bereitgestellt, sodass die Luft durch die Motorraumöffnung in den Vergaserraum mit einem erhöhten Druck eingebracht wird. Folglich muss der Druck vor der Warmluftöffnung 17 innerhalb des Motorraums 15 so hoch sein, dass trotz der Druckbeaufschlagung im Vergaserraum 13 durch die Motorraumöffnung Luft vom Motorraum 15 durch die Warmluftöffnung 17 in den Vergaserraum 13 überführt werden kann.

In den Ausführungsbeispielen ist eine Warmluftöffnung 17 in einem Bereich der Zwischenwand 14 gezeigt, der angrenzend an den oberen Teil 11a des Zylinders 11 angeordnet ist. Es hat sich gezeigt, dass die Luft, die durch das Lüfterrad in den Motorraum 15 befördert wird, im Bereich des oberen Teils 11a des Zylinders 11 den größten Druck aufweist. Dieser Effekt wird ausgenutzt, indem die Warmluftöffnung 17 in der Zwischenwand 14 in einem Bereich im Motorraum 15 angeordnet wird, in welchem der Luftdruck am höchsten ist. Dieser Bereich befindet sich im Bereich des oberen Teils 11a des Zylinders 11, insbesondere zwischen dem oberen Teil 11a des Zylinders 11 und dem Gehäuse 16.

Die Ansichten der Figuren 1 und 2 zeigen in verschiedenen Schnittebenen die Anordnung der Warmluftöffnung 17 im Bereich des oberen Teils des Zylinders 11, um durch den Zylinder 11 erwärmte Luft vom Motorraum 15 in den Vergaserraum 13 zu befördern. Es hat sich dabei gezeigt, dass der Druck der Luft, die durch die Warmluftöffnung 17 in den Vergaserraum 13 gelangt, größer ist als der Druck der Luft, die durch die Motorraumöffnung vom Motorraum 15 in den Vergaserraum 13 gelangt. Im Ergebnis kann durch einfaches Öffnen der Warmluftöffnung 17 ohne Beeinflussung der unteren Motorraumöffnung der Vergaserraum 13 durch die Warmluftöffnung 17 mit erwärmter Luft gespeist werden, sodass eine Vereisung des Vergasers 12 bei niedrigen Außentemperaturen vermieden werden kann und ein verbesserter Lauf des Verbrennungsmotors ermöglicht ist.

Im oberen Teil 11a des Zylinders 11 ist eine Zündkerze 18 angeordnet, und die Warmluftöffnung ist im Bereich der Zündkerze 18 beziehungsweise angrenzend an die Zündkerze 18 angeordnet. Die Luft strömt dabei aus der der Zwischenwand 14 abgewandten Seite am Zylinder 11 vorbei und erwärmt sich dabei. Hat die Luft den Zylinder 11 passiert, so gelangt sie in den Punkt des höchsten Staudrucks, in dem sich die Warmluftöffnung 17 befindet. Der Zylinder 11 ist mit Kühlrippen 21 schematisch gezeigt, und tritt die Luft aus dem Bereich der Kühlrippen 21 wieder aus, so gelangt diese anschließend in den Bereich vor der Warmluftöffnung 17 und kann diese durchtreten.

Das Gehäuse 16 ist mit Mitteln gezeigt, die eine Strömung der Luft vom Lüfterrad in Richtung zur Warmluftöffnung 17 schaffen und innenseitig am Gehäuse 16 angeordnet sind. Die Mittel sind als Luftleitrippen 19 und als Luftleitwände 20 gezeigt, die unmittelbar vor der Warmluftöffnung 17 auf der Seite des Motorraums 15 innenseitig im Gehäuse 16 angeordnet sind. Die Luftleitrippen 19 begünstigen die Luftströmung in Richtung zur Warmluftöffnung 17. Insbesondere laufen die Luftleitrippen 19 trichterförmig in Richtung zur Warmluftöffnung 17 zu. Die Schnittansicht zeigt einen Verlauf der Luftleitrippen 19 entlang der Luftströmung von der der Zwischenwand 14 abgewandten Seite des Zylinders 11 in Richtung zur Zwischenwand 14. Ebenso sind Luftleitwände 20 vorgesehen, die die Luft, die zwischen dem Zylinder 11 und dem Gehäuse 16 entlang strömt, in Richtung zur Warmluftöffnung 17 führen. Durch die Luftleitrippen 19 und die Luftleitwände 20 wird der Druck etwa unterhalb des höchsten Punktes im Gehäuse 16 weiter erhöht, sodass der Staudruck vor der Warmluftöffnung 17 ein Druckniveau erreicht, das über dem Druckniveau des Vergaserraums 13 liegt, der durch die Motorraumöffnung weiterhin durch das Lüfterrad mit Luft gespeist wird. Im Ergebnis muss die Motorraumöffnung nicht erst verschlossen werden, um Warmluft durch die Warmluftöffnung 17 in den Vergaserraum 13 zu führen.

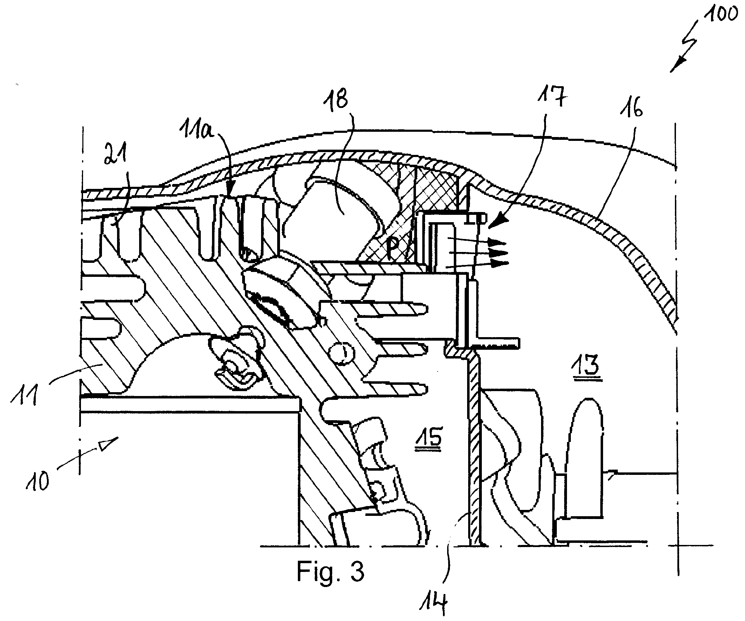

Figur 3 zeigt in einer weiteren Querschnittsansicht ein Ausführungsbeispiel des Motorarbeitsgerätes 100 mit einem Verbrennungsmotor 10, der im Bereich des Zylinders 11 gezeigt ist. Ferner ist in der Schnittansicht das Gehäuse 16 gezeigt, das einteilig mit der Zwischenwand 14 ausgeführt ist, die den Vergaserraum 13 vom Motorraum 15 trennt. Weiterhin ist der Zylinder 11 mit einer Zündkerze 18 gezeigt, und die Warmluftöffnung 17 befindet sich in unmittelbarer Nähe der Zündkerze 18. Der Bereich zwischen dem oberen Teil 11a des Zylinders 11 und der Innenseite des Gehäuses 16 bildet einen Strömungskanal, in dem Luft am Zylinder 11 vorbeiströmen kann, und die sich begünstigt durch Kühlrippen 21 am Zylinder 11 erwärmt. Gelangt die Luft in Richtung zur Warmluftöffnung 17, erreicht sie dort den größten Druck p, gekennzeichnet mit einer Kreuzschraffur.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktive Einzelheiten oder räumliche Anordnungen, können sowohl für sich als auch in den verschiedensten Kombinationen erfindungswesentlich sein. Insbesondere muss das Gehäuse 16 nicht die Außenhaut des Motorarbeitsgerätes 100 bilden, und es kann ein Gehäuse 16 vorgesehen sein, welches lediglich den Zylinder 11 derart umhüllt, dass ein entsprechender Staudruck der Luft zwischen dem oberen Teil 11a des Zylinders 11 und dem Gehäuse 16 vor der Warmluftöffnung 17 gebildet wird.

### BEZUGSZEICHENLISTE

- 100: Motorarbeitsgerät
- 10: Verbrennungsmotor
- 11: Zylinder
- 11a: oberer Teil des Zylinders
- 12: Vergaser
- 13: Vergaserraum
- 14: Zwischenwand
- 15: Motorraum
- 16: Gehäuse
- 17: Warmluftöffnung
- 18: Zündkerze
- 19: Luftleitrippe
- 20: Luftführungswand
- 21: Kühlrippen

- p: Luftdruck

## Patentansprüche

1. Motorarbeitsgerät (100) wie eine Kettensäge, ein Handschleifgerät, eine Handkreissäge, ein Rasenmäher, ein Rasentrimmer oder ein sonstiges Handwerkzeug oder Gerät zur Garten- und Landschaftspflege, aufweisend einen Verbrennungsmotor (10) mit wenigstens einem Zylinder (11) und wenigstens einem Vergaser (12), wobei ein Gehäuse (16) vorgesehen ist, das einen Motorraum (15) wenigstens teilweise umschließt, sodass sich ein oberer Teil (11a) des Zylinders (11) in Richtung zum Gehäuse (16) hin erstreckt, wobei ferner ein Lüfterrad vorgesehen ist, durch das Luft aus dem Motorraum (15) durch eine Warmluftöffnung (17) in den Vergaserraum (13) einbringbar ist,
wobei der Vergaser in einem Vergaserraum (13) angeordnet ist, der durch eine Zwischenwand (14) von dem Motorraum (15) getrennt ist, wobei die Warmluftöffnung (17) in dem Bereich der Zwischenwand (14) angeordnet ist, der angrenzend an den oberen Teil des Zylinders (11) angeordnet ist, und wobei im Bereich des oberen Teils (11a) des Zylinders (11) eine Zündkerze (18) an diesem angeordnet ist, wobei die Warmluftöffnung (17) im Bereich der Zündkerze (18) beziehungsweise angrenzend an die Zündkerze (18) angeordnet ist, wobei das Gehäuse (16) Mittel aufweist, die eine Strömung der Luft vom Lüfterrad in Richtung zur Warmluftöffnung (17) schaffen und innenseitig am Gehäuse (16) angeordnet sind, und wobei die Mittel wenigstens eine und bevorzugt mehrere Luftleitrippen (19) und/oder wenigstens eine und bevorzugt mehrere Luftleitwände (20) aufweisen, die insbesondere innenseitig im Gehäuse (16) angeordnet sind, **dadurch gekennzeichnet, dass** zusätzlich zur Warmluftöffnung (17) eine Motorraumöffnung vorgesehen ist, durch die vom Lüfterrad bereitgestellte Luft in den Vergaserraum (13) einbringbar ist, wobei eine Staubvorabscheidung vorgesehen ist, wobei wenigstens die durch die Motorraumöffnung in den Vergaserraum (13) einbringbare Luft über die Staubvorabscheidung in den Vergaserraum (13) einbringbar ist, welche Luft insbesondere eine niedrigere Temperatur aufweist als die Luft, die durch die Warmluftöffnung (17) in den Vergaserraum (13) einbringbar ist.

2. Motorarbeitsgerät nach Anspruch 1, **dadurch gekennzeichnet, dass** im Zylinder (11) ein Kolben hubbeweglich geführt ist, wobei die Warmluftöffnung (17) in der Höhe oberhalb des oberen Totpunktes des Kolbens angrenzend an den Zylinder (11) angeordnet ist.

3. Motorarbeitsgerät nach einem der vorgenannten Ansprüche, **dadurch gekennzeichnet, dass** die Luftleitrippen (19) und/oder die Luftleitwände (20) derart angeordnet sind, dass sich zwischen dem oberen Teil (11a) des Zylinders (11) und dem Gehäuse (16) vor Einlauf in die Warmluftöffnung (17) ein erhöhter Staudruck der Luft bildet.

4. Motorarbeitsgerät nach einem der vorgenannten Ansprüche, **dadurch gekennzeichnet, dass** der Staudruck im Motorraum (15) vor Einlauf in die Warmluftöffnung (17) größer ist als der Druck der Luft, die sich im Vergaserraum (13) befindet.

5. Motorarbeitsgerät nach einem der vorgenannten Ansprüche, **dadurch gekennzeichnet, dass** ein Verschlusselement vorgesehen ist, das in eine Sommerstellung bringbar ist, in der die Warmluftöffnung (17) geschlossen ist und das in eine Winterstellung bringbar ist, in der die Warmluftöffnung (17) geöffnet ist.

## Claims

1. Motorised work device (100) such as a chain saw, a hand grinder, a hand-held circular saw, a lawnmower, lawn trimmer or other manually operated tool or device for garden and landscape maintenance, comprising an internal combustion engine (10) with at least one cylinder (11) and at least one carburettor (12), wherein a housing (16) is provided which at least partially encloses an engine compartment (15) so that an upper section (11a) of the cylinder (11) extends towards the housing (16), wherein a fan impeller is also provided, by means of which air can be introduced from the engine compartment (15) through a hot-air opening (17) into the carburettor chamber (13),
wherein the carburettor is arranged in a carburettor chamber (13) which is separated from the engine compartment (15) by a partition panel (14), wherein the hot-air opening (17) is arranged in the area of the partition panel (14) adjacent to the upper section of the cylinder (11), and wherein a spark plug (18) is arranged on the cylinder (11) in the area of the upper section (11a) thereof, wherein the hot-air opening (17) is arranged in the area of the spark plug (18) or adjoining the spark plug (18), wherein the housing (16) has means that create a flow of air from the fan impeller towards the hot-air opening (17) and that are arranged on the inside of the housing (16), and wherein the means comprise at least one and preferably a plurality of air guide ribs (19) and/or at least one and preferably a plurality of air guide panels (20) that are arranged in particular on the inside of the housing (16), **characterized in that** in addition to the hot-air opening (17) an engine compartment opening is provided, through which air supplied by the fan impeller can be introduced into the carburettor chamber (13), wherein a dust pre-separation means is provided, wherein at least the air that can be introduced into the carburettor chamber (13) through the engine compartment opening can be introduced into the carburettor chamber (13) via the dust pre-separation means, which air in particular has a lower temperature than the air that can be introduced into the carburettor chamber (13) through the hot-air opening (17).

2. Motorised work device according to Claim 1, **characterized in that** in the cylinder (11) a piston is guided to effect a stroke movement, wherein the hot-air opening (17) is arranged at a level above the upper dead centre point of the piston adjacent to the cylinder (11).

3. Motorised work device according to any one of the previous claims, **characterized in that** the air guide ribs (19) and/or the air guide panels (20) are arranged in such a way that an increased dynamic pressure of the air is formed between the upper section (11a) of the cylinder (11) and the housing (16) prior to the infeed into the hot-air opening (17).

4. Motorised work device according to any one of the previous claims, **characterized in that** the dynamic pressure in the engine compartment (15) prior to the infeed into the hot-air opening (17) is greater than the pressure of the air present in the carburettor chamber (13).

5. Motorised work device according to any one of the previous claims, **characterized in that** a sealing element is provided which can be moved into a summer position in which the hot-air opening (17) is closed and which can be moved into a winter position in which the hot-air opening (17) is open.

## Revendications

1. Appareil de travail motorisé (100) comme une scie à chaîne, une meuleuse portative, une scie circulaire portative, une tondeuse à gazon, une débrousailleuse ou un autre outil manuel ou équipement pour les travaux de jardinage et de paysagisme, comprenant un moteur à combustion interne (10) avec au moins un cylindre (11) et au moins un carburateur (12), un boîtier (16) étant prévu, qui enveloppe au moins en partie un compartiment moteur (15), de manière qu'une partie supérieure (11a) du cylindre (11) s'étend en direction du boîtier (16), une roue de ventilateur étant en outre prévue, à travers laquelle l'air du compartiment moteur (15) peut être introduit par une ouverture d'air chaud (17) dans le compartiment du carburateur (13),
le carburateur étant disposé dans un compartiment de carburateur (13), qui est séparé du compartiment moteur (15) par une paroi intermédiaire (14), l'ouverture d'air chaud (17) étant disposée dans la zone de la paroi intermédiaire (14), qui est disposée attenante à la partie supérieure du cylindre (11), et une bougie d'allumage (18) étant disposée sur celui-ci dans la zone de la partie supérieure (11a) du cylindre (11), l'ouverture d'air chaud (17) étant disposée dans la zone de la bougie d'allumage (18) respectivement attenante à la bougie d'allumage (18), le boîtier (16) comportant des moyens qui créent un débit d'air depuis la roue de ventilateur en direction de l'ouverture d'air chaud (17) et sont disposés intérieurement sur le boîtier (16) et les moyens comportant au moins une et de préférence plusieurs déflecteurs d'air (19) et/ou au moins une ou de préférence plusieurs parois de guidage d'air (20), qui sont disposés en particulier à l'intérieur dans le boîtier (16) **caractérisé en ce qu'**en plus de l'ouverture d'air chaud (17) une ouverture de compartiment moteur est prévue à travers laquelle l'air fourni par la roue de ventilateur peut être introduit dans le compartiment de carburateur (13), un prédépoussiéreur étant prévu, l'air pouvant être introduit par l'ouverture du compartiment moteur dans le compartiment de carburateur (13) peut être au moins introduit dans le compartiment de carburateur (13) par le prédépoussiéreur, lequel air comporte en particulier une température plus basse que l'air qui peut être introduit dans le compartiment de carburateur (13) par l'ouverture d'air chaud (17).

2. Appareil de travail motorisé selon la revendication 1 **caractérisé en ce que** dans le cylindre (11) un piston est guidé de manière mobile concernant la course, l'ouverture d'air chaud (17) étant disposée attenante au cylindre (11) à la hauteur au-dessus du point mort haut du piston.

3. Appareil de travail motorisé selon l'une quelconque des revendications précédentes **caractérisé en ce que** les déflecteurs d'air (19) et/ou les parois de guidage d'air (20) sont disposés de telle manière qu'une pression dynamique accrue de l'air se forme entre la partie supérieure (11a) du cylindre (11) et le boîtier (16) avant l'entrée dans l'ouverture d'air chaud (17).

4. Appareil de travail motorisé selon l'une quelconque des revendications précédentes **caractérisé en ce que** la pression dynamique dans le compartiment moteur (15) est plus grande avant l'entrée dans l'ouverture d'air chaud (17) que la pression de l'air qui se trouve dans le compartiment du carburateur (13).

5. Appareil de travail motorisé selon l'une quelconque des revendications précédentes **caractérisé en ce qu'**un élément de fermeture est prévu, qui peut être mis dans une position été, dans laquelle l'ouverture d'air chaud (17) est fermée et qui peut être mis dans une position hiver, dans laquelle l'ouverture d'air chaud (17) est ouverte.
